(19) Europäisches Patentamt

European Patent Office

Office européen des brevets

(11) Veröffentlichungsnummer: **0 260 219 B1**

(12) **EUROPÄISCHE PATENTSCHRIFT**

(45) Veröffentlichungstag der Patentschrift: **01.07.92**

(51) Int. Cl.⁵: **B25J 19/00**, B25J 9/12

(21) Anmeldenummer: **87730074.9**

(22) Anmeldetag: **07.07.87**

(54) **Roboterarm.**

(30) Priorität: **09.09.86 DE 3631024**

(43) Veröffentlichungstag der Anmeldung:
**16.03.88 Patentblatt 88/11**

(45) Bekanntmachung des Hinweises auf die
Patenterteilung:
**01.07.92 Patentblatt 92/27**

(84) Benannte Vertragsstaaten:
**AT BE CH DE ES FR GB IT LI NL SE**

(56) Entgegenhaltungen:
**EP-A- 0 169 943
DE-A- 2 536 930
DE-A- 2 732 559
DE-A- 3 410 637
DE-B- 2 717 870**

(73) Patentinhaber: **MANNESMANN Aktiengesellschaft
Mannesmannufer 2
W-4000 Düsseldorf 1(DE)**

(72) Erfinder: **Staggl, Horst
Brunnenweg 6
W-5802 Wetter 2(DE)**
Erfinder: **Stöber, Manfred, Dipl.-Ing.
Am Schichtmeister 3
W-5810 Witten(DE)**
Erfinder: **Sprung, Hartwig
Am Brasberg 71
W-5802 Wetter 4(DE)**

(74) Vertreter: **Meissner, Peter E., Dipl.-Ing. et al
Patentanwaltsbüro Meissner & Meissner,
Herbertstrasse 22
W-1000 Berlin 33(DE)**

**Beschreibung**

Die Erfindung betrifft einen Roboterarm mit einem sich an einem Arbeitsarm anschließenden, von Motoren bewegten Anschlußstück für Werkzeuge, Werkstücke, Werkstückgreifer oder Greiferwechselsysteme, wobei die Motoren an dem dem Anschlußstück gegenüberliegenden Ende des Arbeitsarms angeordnet sind und über Abtriebsverbindungen mit in einer Schwenkachse eines Schwenkkopfes des Anschlußstückes gelagerten Zahnradern verbunden sind.

Bei einem Roboterarm nach der DE-PS 27 17 870 ist die Getriebekombination der Achsen "E + P" nicht modular, also nicht flexibel einsetzbar. Ferner muß der Arbeitsarm biegesteif ausgebildet sein und die deshalb erforderliche, höhere Profil-Masse muß um die Arbeitsarm-Achse gedreht werden. Zur Erzielung einer vorgegebenen Positoniergenauigkeit ist also nur ein begrenzter Arbeitshub in Richtung der Achse "R" möglich und ein entsprechend dimensionierter Drehantrieb für das Drehen des Arbeitsarms um seine Achse "D" ist erforderlich. Die Bezeichnung der Achsen ist Gegenstand der VDI-Richtlinie 2861.

Aufgabe der Erfindung ist es daher, den Roboterarm so zu gestalten, daß die genannten Nachteile vermieden werden.

Diese Aufgabe wird dadurch gelöst, daß sich alle Drehachsen der Elemente, wie Arbeitsarm in Form eines Arbeitsarmes sowie Schwenkkopf und Anschlußstück in einem gemeinsamen Schnittpunkt treffen.

Bei dieser erfindungsgemäßen Anordnung sind die Motoren frei zugänglich, und ihr Gewicht ist an einem Ende des Arbeitsarms abgestützt und bildet ein Gegengewicht zur Transportlast des Arbeitsarms am Anschlußstück.

Die Achsenanordnung ist unter Berücksichtigung von nach außen geschützt integrierten Energie- und Steuerleitungen erfindungsgemäß so gestaltet, daß sich die Drehachsen "D,E,P" in einem Schnittpunkt treffen, so daß beim Schwenken und Drehen des Anschlußstückes gegenüber der Hubsäule keine Koordinatenveränderung auftritt.

Die Abtriebsverbindungen sind Zahnriemen, die zu in der Schwenkachse des Anschlußstückes angeordneten Zahnrädern geführt sind. Eines der Zahnräder ist auf einer Eintriebswelle eines Reduziergetriebes befestigt, dessen Eintriebsseite mittels Schrauben an der Rotationsgabel befestigt ist und dessen Abtriebsseite über Schrauben mit einem als Anschraubflansch ausgebildeten Arm der Schwenkgabel verbunden ist. Der andere Zahnriemen ist zum Drehen des Abtriebsendes des Anschlußstückes mit einem Zahnrad auf der Eintriebswelle eines Winkelgetriebes befestigt, dessen Abtrieb in der senkrechten D-Achse des Drehmotors liegt und mit einem Rotationsgetriebe verbunden ist, das mittels Schrauben im Flanschende der Schwenkgabel befestigt ist und an dessen Abtriebsende das Anschlußstück mittels Schrauben befestigt ist.

Die Verwendung schnell laufender Zahnriemen hat den Vorteil, daß durch etwaige Längungen des Zahnriemens verursachte Geschwindigkeitsunterschiede zwischen Motorabtrieb und Getriebeeintrieb im Getriebe stark reduziert werden.

In weiterer Ausgestaltung der Erfindung ist das Drehrohr aus Leichtmetall hergestellt und mit einfachen, angeschraubten und verstifteten Paßfedern, die in Nuten eines Flansches der Rotationsgabel und solche eines Anschlußrohres auf der gegenüberliegenden Antriebsseite eingreifen, biegungsfrei eingekuppelt. Ein weiterhin vorteilhaftes Erfindungsmerkmal ist die Anordnung des Getriebemotors zum Drehen der Achse D bzw. des Drehrohres mit der Rotationsgabel zwischen den übrigen Antriebsmotoren sowie dem Anschlußstück und die Verwendung eines einfachen, spielfreien Zahnriementriebes, der über eine Drehplatte mit Anschlußrohr und Kupplungsnuten direkt auf das Drehrohr wirkt, so daß die Gesamtlänge des Arbeitsarms einerseits gering ausfällt und andererseits ein preiswerter Drehrohrantrieb vorliegt.

Die Energieversorgung für die am Anschlußstück vorhandenen Werkstückgreifer erfolgt nach weiteren Merkmalen der Erfindung über Energieleitungen von einer ortsfesten Anschlußstelle, die hinter einer Halterung als Schlaufe ausgebildet sind, zu einem oberen Leitungsdrehspeicher und von diesem durch ein im Zentrum des Drehrohres angeordnetes Schutzrohr durch eine Öffnung im Schwenkflansch der Schwenkgabel zu einem unteren Leitungsdrehspeicher, der das Rotationsgetriebe ringförmig umschließt. Die Energieleitungen sind in den Drehspeichern vorzugsweise als flach liegende Spiralen ausgebildet, zwischen denen Scheibenringe angeordnet sind. Die Energieleitungen können auch schraubenförmig gewickelt und mit unterschiedlichen Durchmessern koaxial zueinander angeordnet sein, wobei dann zwischen den einzelnen Schraubenwendeln dehnbare Zylindermäntel angeordnet sind, die das Zusammenfallen der einzelnen Schraubenwindungen ver hindern und diese zum Verhindern von Leitungsschäden auseinanderhalten. Auch können die Energieleitungen zu einer gemeinsamen Flachleitung miteinander verbunden sein und mehrere senkrecht stehende Spiralwindungen bilden. Bei einer Verdrehung des Abführendes gegenüber dem Einführende der Energieleitungen in die Drehspeicher werden die Spiral- oder Schraubenwindungen im Durchmesser vergrößert oder verkleinert. Um dies zu ermöglichen, sind die Windungen in einem Ringraum angeordnet, der derartige Durchmesseränderungen beim Drehen der Gelenke bzw. des Anschlußstückes zuläßt.

Nach weiterem Erfindungsmerkmal wird die Lebensdauer der spiralförmig verlegten und nicht plastisch vorgeformten Kabel dadurch erheblich erhöht, daß die Kabel, aber auch die Schläuche, im Bereich des Kabel abganges aus dem Leitungsdrehspeicher mittels einer zweiteiligen Schwenkschelle so beweglich mit dem Drehspeicherdeckel verbunden sind, daß durch den somit vergrößerten Kleinstbiegeradius ein Kabel- bzw. Schlauchbruch weitestgehend vermieden werden kann.

Erfindungsgemäß ist der Druckschlauch innerhalb des unteren Leitungsdrehspeichers spiralförmig, plastisch so vorgeformt, daß dadurch seine Lebensdauer steigt, und zumindestent seine Außenhaut ist aus PTFE oder einem ähnlichen Kunststoff mit vergleichbar niedrigem Reibungskoeffizienten hergestellt, damit die Reibungskräfte der Schlauchwindungen untereinander gering sind.

Auch die Kabel im Bereich des unteren Leitungsdrehspeichers haben zumindest eine Außenhaut aus PAF oder einem Kunststoff mit ähnlich niedrigem Reibungskoeffizienten, wie z.B. PTFE. In ihrem Inneren ist erfindungsgemäß Isolier- und Gleitmaterial in Form von mit Luftbläschen auf geschäumtem PTFE so angeordnet, daß sich durch die so erzielte hohe Kabelelastizität eine besonders hohe Lebensdauer ergibt.

Zur Erzielung eines extrem kleinen Außendurchmessers für den unteren Leitungsdrehspeicher wird nach einem weiteren Erfindungsmerkmal für die Energie- und Steuerleitungskabel ein ovaler Kabelquerschnitt vorgeschlagen der so verlegt ist, daß sich in Richtung der Drehachse P die größere Querschnittshöhe ergibt.

Der Drehbewegungsausgleich für mindestens 360 Grad wird im oberen Leitungsdrehspeicher mittels eines Elastikbandes sichergestellt, das die einzelnen Kabel und/oder Schläuche mittels Schellen trägt und mit seinem einen Ende außen am Gehäuse des Leitungsdrehspeichers und mit seinem anderen Ende an einer Wickeltrommel befestigt ist, die wiederum von einer Mitnehmerbuchse zusammen mit der Rotationsgabel in Drehung versetzt wird.

Die Schellen sind modular unterschiedlich aufgebaut und tragen die Kabel und Schläuche mittels des spiralähnlich verlegten Elastikbandes, das in einem bestimmten, empirisch ermittelten Bereich mittels Distanzelementen geführt wird, so daß sich die Schellen mit ihren Verbindungselementen beim Schließen des Elastikbandsystems nicht gegenseitig berühren können, wie das bei einer reinen Spiralform der Fall wäre. Zwischen den Leitungsdrehspeichern sind Kabelverbinder für die unterschiedlichen Kabel angeordnet.

Ein Vorteil der Erfindung ist die gesamte Anordnung der Energie- und Steuerleitungs-Komponenten in modularem Aufbau zum Ausgleich aller Bewegungen in ökonomisch günstiger Ausführung, jeweils für die unterschiedlichen Anwendungsmöglichkeiten, z.B. bei Vertikal- oder Horizontal-Anwendung.

Der Leitungsverlauf zwischen einer Anschlußstelle an der den Arbeitsarm tragenden Rollenführung und dem Anschlußstück, zur Aufnahme z.B. von einem Greifer, ist in zwei Abschnitte aufgeteilt.

Beim vertikal ausgerichten Arbeitsarm sind preiswerte Energie- und Steuerleitungen zwischen der Anschlußstelle der Rollenführung und einer Verbindungsstelle im Bereich der mitdrehenden Antriebsmotoren verlegt und von da aus bis hin zu einer weiteren Verbindungsstelle im Anschlußstück höherwertige Kabel, weil diese innerhalb eines kompakt gebauten Leitungsdrehspeichers am Anschlußstück besonders hohen Beanspruchungen unterworfen sind.

Aus diesem Grund ist oberhalb der mitdrehenden Antriebsmotoren ein Leitungsdrehspeicher mit einem Elastikband als Kabelträger angeordnet und beim Anschlußstück ein Leitungsspeicher mit Scheiben als Träger der einzelnen Kabel und/oder Druckschläuche.

Der lineare Wegausgleich zwischen der Anschlußstelle an der Rollenführung und dem oberen Leitungsdrehspeicher wird durch in einer hängenden Schlaufe durch Energiezuführungsketten oder -schläuche stabilisierte Energie- und Steuerleitungen gewährleistet.

Der Boden des Leitungsdrehspeichergehäuses ist in seinem Drehzentrum oben und unten mit Gleitlagerscheiben ausgerüstet und zwischen die Stirnwände der Wickeltrommel und Mitnehmerbuchse eingefügt, so daß der Leitungsdrehspeicher zusammen mit außen befestigten Halterungen, die mit dem den Säulendrehmotor tragenden Festflansch verbunden sind, getragen wird und die mitdrehenden Antriebsmotoren frei durchdrehen können.

Nach weiteren vorteilhaften Erfindungsmerkmalen weist das Anschlußstück Montageräume zur Aufnahme von Überwachungsgeräten wie Druckwächter, Ventile, Verbindungsstellen für die Energie- und Steuerleitungen sowie einen genormten Zentrierflansch zur Aufnahme z.B. eines Wechselsystems auf, so daß diese Bauteile nicht sperrig außen angebaut werden müssen und der schädliche Druckabfall durch einen kürzestmöglichen Schlauch zwischen dem Druckwächter und z.B. einen Sauggreifer gering ausfällt. Die Montageräume sind zur einfachen Montage und Wartung von außen frei zugänglich und während des Betriebes durch einen einfachen Schutzmantel in Form einer elastischen Folie, die in Nuten geführt wird, geschützt.

Durch Festsetzen bzw. Weglassen von Drehachsen bzw. Nebenachsen sind bis zu neun verschiedene Robotervarianten erzeugbar.

Für den Hersteller wie für den Betreiber von Industrierobotern mit dem Roboterarm nach diesem detailliert beschriebenen Konzept kommt erfindungsgemäß der relativ große Vorteil der flexiblen Anwendung der einzelnen Roboterarm-Moduln voll zur Geltung, indem je nach Bedarf oder Nachrüstbedarf mit den gleichen Moduln des Gesamtbaukastens auch mit Hilfe preiswerter Ersatzmoduln neun verschiedene Achs-Kombinations-Ausführungen hergestellt werden können. Z.B. kann das Reduziergetriebe zum Schwenken durch einen starren Flansch, der die Rotationsgabel mit der Schwenkgabel in einer benötigten Winkelstellung blockiert, ersetzt werden und können weitere Antriebselemente des Schwenkantriebes entfallen, so daß sich mit dem um z.B. eine vertikale Achse "P" drehenden Anschlußstück mit zwei symmetrisch angeordneten Greifern ein Greiferwechselsystem ergibt.

Mehrere Ausführungsbeispiele der Erfindung sind in den Zeichnungen dargestellt und im folgenden erläutert. Es zeigen:

Fig. 1    eine Hubsäule eines Industrieroboters in der Seitenansicht.

Fig. 2    das obere Ende der Hubsäule im Längsschnitt mit den dort angeordneten Motoren und einem oberen Leitungsdrehspeicher,

Fig. 3    eine Draufsicht auf den Leitungsdrehspeicher von Fig. 2,

Fig. 4    die untere Schwenkachse der Hubsäule aus Fig. 1 in größerem Maßstab mit einem unteren Leitungsdrehspeicher,

Fig. 5    eine Draufsicht auf Fig. 4,

Fig. 6    das untere Ende eines Schutzrohres mit einer Schwenkbuchse für Energie- und Steuerleitungen,

Fig. 7    einen Teilschnitt des unteren Leitungsdrehspeichers,

Fig. 8    eine Zugangsöffnung des Leitungsdrehspeichers nach Fig.7,

Fig. 9    einen Kabelabgang des Leitungsdrehspeichers nach Fig. 7.

Fig. 10   neun verschiedene Achs-Kombinations-Ausführungen.

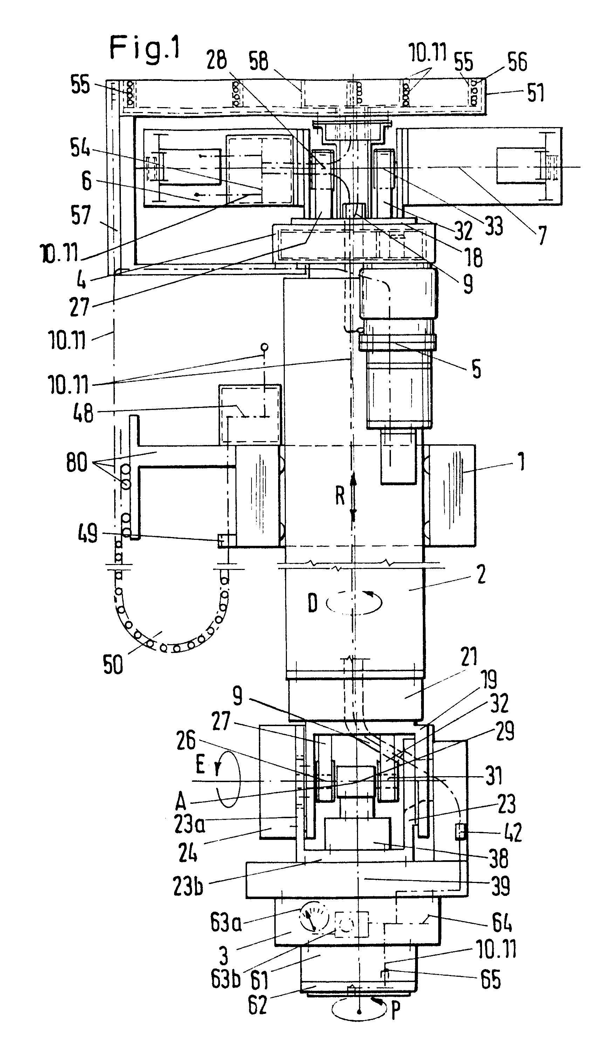

An einer Rollenführung 1 eines nicht gezeichneten Portalträgers eines Industrieroboters ist eine Hubsäule 2 mit einem beweglichen Anschlußstück 3 für Greifer und/oder Werkzeuge höhenverschiebbar geführt. Die Hubsäule 2 hat am oberen Ende einen Festflansch 4 für einen Säulendrehmotor 5 für die senkrechte D-Achse der Hubsäule 2, einen Schwenkmotor 6 zum drehenden Heben und Senken einer Schwenkgabel 23 mit dem Anschlußstück 3 um eine Achse E und einen Drehmotor 7 zum Drehen des Anschlußstückes 3 um die Rotationsachse P. Fig. 1 zeigt auch die Führung von Energieleitungen 10 und 11 von einer Anschlußstelle 48 über eine Halterung 49 unter Bildung einer Schlaufe 50 an einer Schlaufenführung 80 vorbei zu einem oberen Leitungsdrehspeicher 51. In ähnlicher Weise sind die Kabel 10 auch zum Säulendrehmotor 5 geführt. Vom Zahnrad 28 des Schwenkmotors 6 führt ein Zahnriemen 27 zum Zahnrad 26 eines Reduziergetriebes 24. Vom Zahnrad 33 des Drehmotors 7 führt ein Zahnriemen 32 zu einem Eintriebszahnrad 31 eines Winkelgetriebes 29, das über ein Rotationsgetriebe 38 mit dem Anschlußstück 3 verbunden ist. Einige der Energieleitungen 10, 11 führen vom oberen Leitungsdrehspeicher 51 über eine Verbindungsstelle 54 zu einem unteren Leitungsdrehspeicher 39.

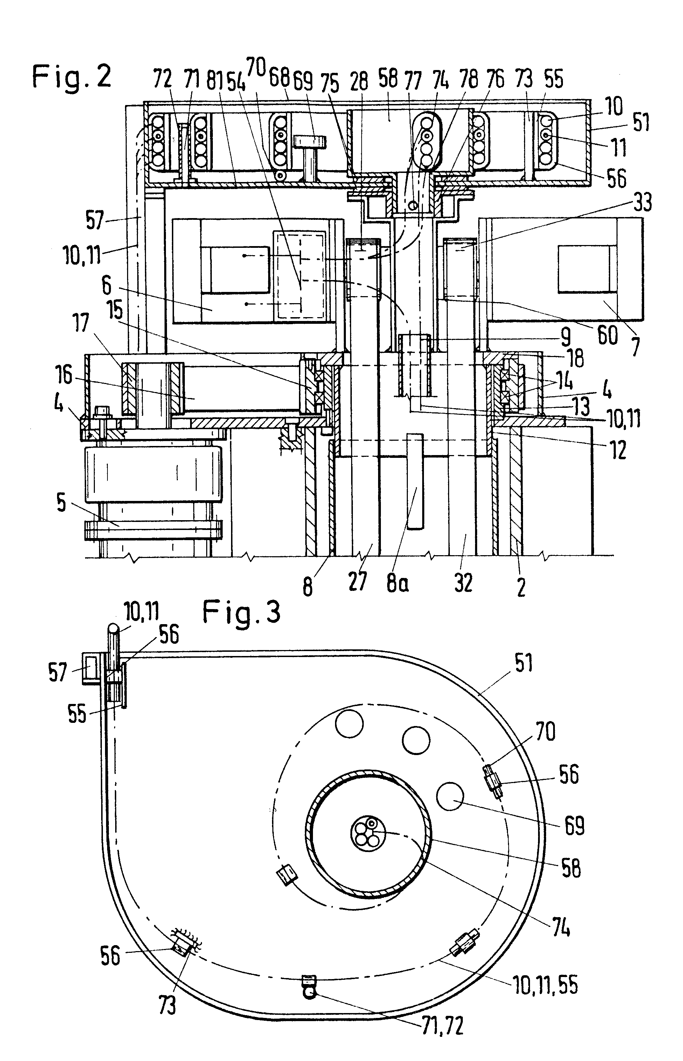

In der Hubsäule 2 ist, wie Fig. 2 zeigt, ein Drehrohr 8 mit einem Schutzrohr 9 für die Energieleitungen 10 und 11 in Form zweier Kabel und einer Schlauchleitung angeordnet. Das Drehrohr 8 ist am oberen Ende mit einem Anschlußrohr 12 in einem Lagerring 13 geführt, der auf dem Festflansch 4 für den Säulendrehmotor 5 befestigt ist. Der Lagerring 13 hat zwei Lager 14 für eine Zahnscheibe 15, die über einen Zahnriemen 16 mit einem Zahnrad 17 des Getriebes des Säulendrehmotors 5 verbunden ist. Die Zahnscheibe 15 ist über eine Drehplatte 18 drehtest mit dem Anschlußrohr 12 und damit auch mit dem Drehrohr 8 verbunden.

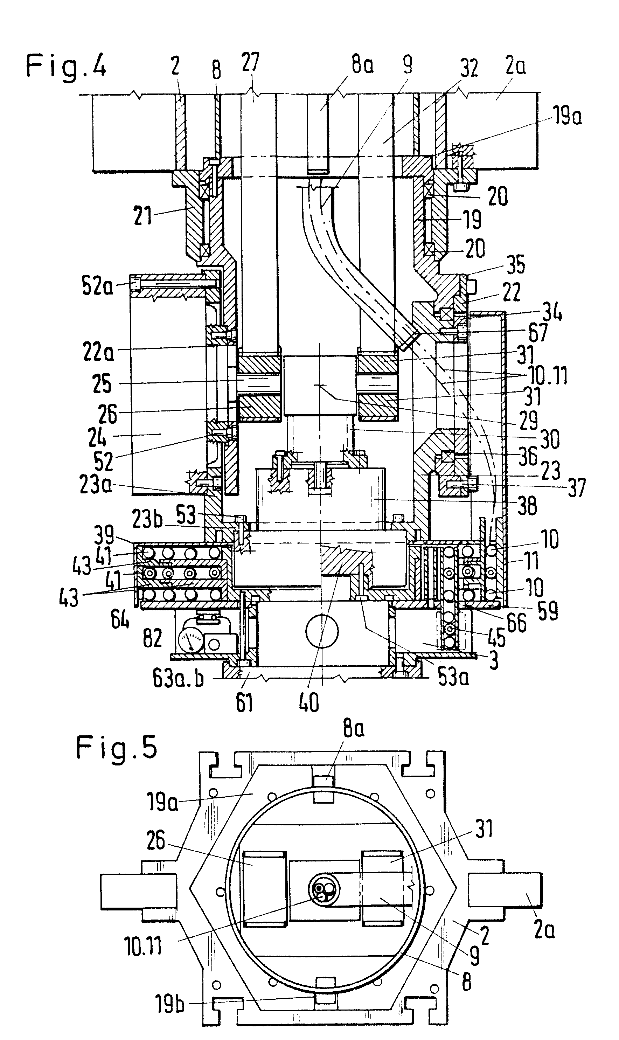

Fig. 4 und 5 zeigen den Anschluß des Drehrohres 8 mit dem unteren Ende über eine Paßfeder 8a an einer Nute 19b eines Flansches 19a einer Rotationsgabel 19, die über Lager 20 im Abschlußende 21 der Hubsäule 2 geführt ist. Die beiden Gabelenden der Rotationsgabel haben konzentrisch zueinander liegende waagerechte Bohrungen 22 und 22a für die darin gelagerte Schwenkgabel 23, deren einer Arm 23a als Anschraubflansch für das Reduziergetriebe 24 ausgebildet ist. Seine Eintriebswelle 25 trägt das bereits erwähnte Zahnrad 26 für den zum Zahnrad 28 des Schwenkmotors 6 geführten Zahnriemen 27. Das sich schnell drehende Zahnrad 26 bewirkt über das Reduziergetriebe 24 das langsame Bewegen der Schwenkgabel 23 mit dem Anschlußstück 3. Die Eintriebsseite des Reduziergetriebes 24 ist über Schrauben 52 mit der Rotationsgabel 19, die Abtriebsseite ist über Schrauben 52a mit der Schwenkgabel 23 verbunden.

In der Schwenkgabel 23 ist koaxial zur Eintriebswelle 25 ein Winkelgetriebe 29 angeordnet, dessen Abtriebsflansch 30 in der Drehachse P des Anschlußstückes 3 liegt. Das Eintriebszahnrad 31 des Winkelgetriebes 29 wird über den bereits erwähnten Zahnriemen 32 vom Zahnrad 33 des Drehmotors 7 angetrieben. Ein ein Lager 36 teilweise überdeckender ringförmiger Schwenkflansch 34 verhindert das Herausrutschen der Schwenkgabel 23 aus der Rotationsgabel 19, in deren Bohrung 22 das Lager 36 von einem ringförmigen Halteflansch 35 mittels Schrauben 37 gesichert ist.

Der Abtriebsflansch 30 des Winkelgetriebes 29 ist mit einem Reduziergetriebe 38 verbunden, das zusammen mit dem das Reduziergetriebe 38 im unteren Bereich umgebenden Leitungs-Drehspeicher 39 mit dem Flanschende 23b der Schwenkgabel 23 mittels Schrauben 53 verschraubt ist. Die Abtriebswelle 40 des Reduziergetriebes 38 überträgt die Drehung des Drehmotors 7 auf das flanschartige Anschlußstück 3 für einen Greifer oder dergleichen.

Fig. 5 zeigt als Draufsicht auf Fig. 4 die Hubsäule 2 mit ihren Führungsschienen 2a sowie das Drehrohr 8 mit dem Schutzrohr 9 und den Zahnrädern 26 und 31 sowie die Verbindung des Drehrohres 8 über eine Paßfeder 8a mit einer Nute 19b im Flansch 19a der Rotationsgabel 9.

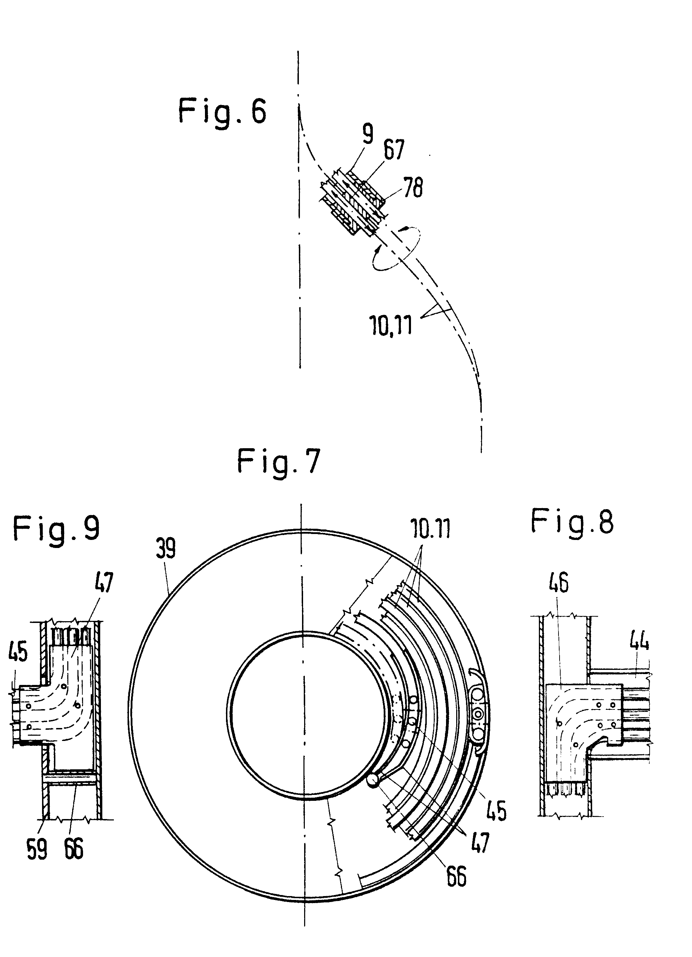

Die durch das Schutzrohr 9 geführten Kabel 10 und die Schlauchleitung 11 werden durch die Öffnung des in Fig. 4 gezeigten Schwenkflansches 34 zu Spiralwendeln 41 nach den Fig. 4 bzw. 7 geführt. Das untere Ende des Schutzrohres 9 hat eine Lagerbuchse 78 mit einer Schwenkbüchse 67, wie Fig. 6 zeigt, zur Führung der Kabel 10 und der Schlauchleitung 11, die sich damit zwängungsfrei in Längsrichtung bewegen können. Die beiden Kabel 10 und die Schlauchleitung 11 liegen in Spiralen übereinander und sind durch Scheibenringe 43 voneinander getrennt. Die mit einer Schelle 46 versehene Zugangsöffnung 44 ist in den Fig. 7 und 8 dargestellt und befindet sich immer an der gleichen Stelle des Leitungsdrehspeichers 39, während sich der in den Fig. 7 und 9 gezeichnete Kabelabgang 45 mit dem Drehrohr 8 und dem Anschlußstück 3 dreht.

Fig. 7 zeigt in der rechten Hälfte die Energieleitungen 10 bzw. 11 in gespreizter Spirale. Nach Verdrehen des Kabelabganges 45 um ca. 390 Grad zieht sich die Spirale zusammen, die durch Zurückdrehen des Kabelabganges 45 wieder gegen den Außenmantel des Leitungsdrehspeichers 39 geschoben wird. Dies wird von Schwenkschellen 47 unterstützt, die über einen Lagerdorn 66 im Drehspeicherdeckel 59 gelagert sind. Bei gespreizten Energieleitungen sind etwas weniger als vier Spiralwindungen vorhanden, die beim Zusammenziehen zu etwas über fünf Spiralwindungen werden. Die Anzahl der Spiralwindungen wird bestimmt von der Dicke und Steifigkeit der Energieleitungen sowie von dem größtmöglichen Durchmesser des unteren Leitungsdrehspeichers 39, der mittels Schrauben 53a am Rotationsgetriebe 38 befestigt ist und einen Drehspeicherdeckel 59 hat, wie Fig. 9 zeigt.

In dem bereits erwähnten oberen Leitungsdrehspeicher 51 kommen die Kabel 10 und die Schlauchleitung 11 im Bereich einer Halterung 57 für den Leitungsdrehspeicher 51 an, wo sie mittels Klemmen 56 befestigt sind. Sie sind mit weiteren Klemmen 56 übereinander an einem Flachprofil-Elastikband 55 befestigt und mit diesem zusammen spiralförmig zu einer Öffnung 74 einer Wickeltrommel 58 geführt, die drehfest mit dem Drehrohr 8 verbunden ist. Vom Zentrum der Wickeltrommel 58 führen einige der Kabel 10 zu den Motoren 6 und 7. Weitere Kabel 10 und die Schlauchleitung 11 führen durch das Schutzrohr 9 im Zentrum des Drehrohres 8 über Kabelverbinder 42 zu dem unteren Leitungsdrehspeicher 39.

Das Elastikband 55 mit den Kabeln 10 und der Schlauchleitung 11 ist noch an einem auf dem Boden 81 des Leitungsdrehspeichers 51 angeordneten Halter 73 befestigt und dann an der Innenseite eines auf dem Boden 81 befestigten Lagerdorns 71 mit Schwenkschwelle 72 und an der Außenseite mehrerer Distanzelemente 69 entlang zur Öffnung 74 geführt. Zwischen den Führungspunkten gleitet die Spirale mit an den Klemmen 56 befestigten Gleitelementen 70 auf dem Boden 81, wie auch in Fig. 2 zu erkennen ist. (Die Teile 69 und 73 sind in Fig. 2 nicht in der mit Fig. 3 übereinstimmenden Lage gezeichnet sondern in einer zeichnerisch günstigen Lage.)

Der Leitungsdrehspeicher 51 ist mit einer Abdeckung 68 versehen. Der Boden der Wickeltrommel 58 gleitet über Gleitlagerscheiben 75 über den Boden 81 des Leitungsdrehspeichers 51 und ragt mit einer Lagerbuchse 78 in eine Mitnehmerbuchse 76 und ist über eine Mitnehmerschraube 77 damit verbunden. Die Mitnehmerbuchse 76 ist über Stützen 60 mit der Drehplatte 18 des Drehrohres 8 verbunden.

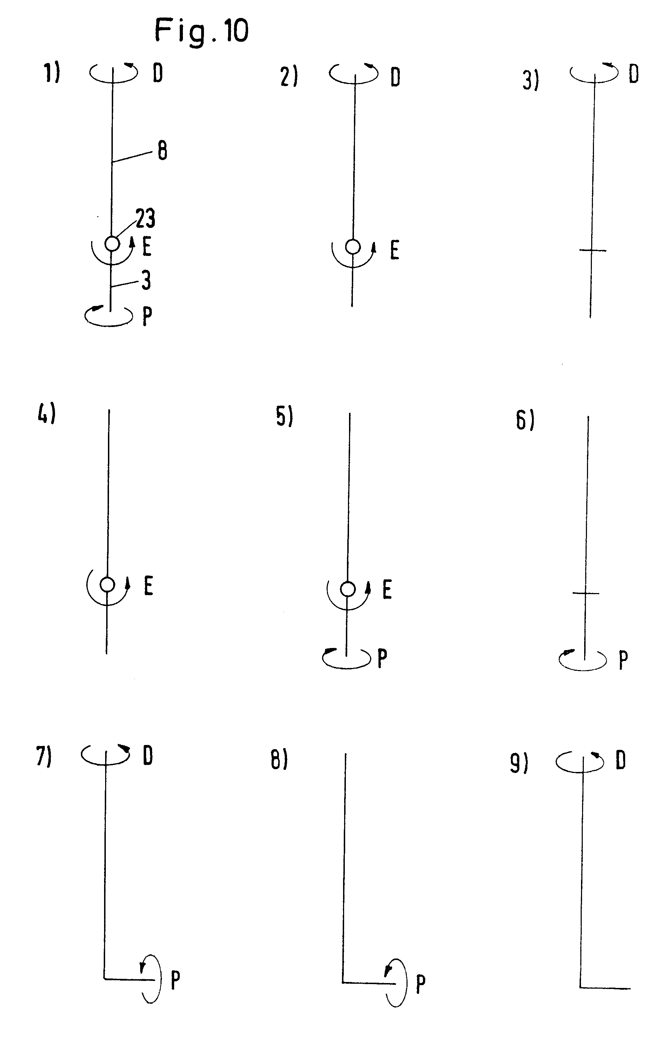

Wie in Fig. 10 erkennbar ist, können durch Festsetzen bzw. Weglassen von Nebenachsen neun verschiedene Robotervarianten erzeugt werden. Es zeigen

| Fig. | Drehrohr 8 | Schwenkgabel 23 | Anschlußstück 3 |
|------|-----------|-----------------|-----------------|
| 10.1 | dreht | beweglich | dreht selbst |
| 10.2 | dreht | beweglich | dreht mit |
| 10.3 | dreht | | dreht mit |
| 10.4 | | beweglich | |
| 10.5 | | beweglich | dreht selbst |
| 10.6 | | | dreht selbst |
| 10.7 | dreht | abgewinkelt | dreht selbst |
| 10.8 | | abgewinkelt | dreht selbst |
| 10.9 | dreht | abgewinkelt | |

**Patentansprüche**

**1.** Roboterarm mit einem sich an einem Arbeitsarm anschließenden, von Motoren bewegten Anschlußstück (3) für Werkzeuge, Werkstücke, Werkstückgreifer oder Greiferwechselsysteme, wobei die Motoren (5, 6, 7) an dem dem Anschlußstück (3) gegenüberliegenden Ende des Arbeitsarmes angeordnet und über Antriebsverbindungen mit in einer Schwenkachse eines Schwenkkopfes (23) des Anschlußstü kes (3) gelagerten Zahnrädern (26, 31) verbunden sind, wobei auf einer Schwenkachse E ein mit der Schwenkgabel (23) verbundenes Zahnrad (26) für einen zu dem Schwenkmotor (6) führenden ersten Zahnriemen (27) und ein mit dem Anschlußstück (3) gekoppeltes Eintriebszahnrad (31) für einen zu dem Drehmotor (7) führenden zweiten Zahnriemen (32) für die Drehung das Anschlußstückes um eine Achse P angeordnet sind und ein Säulendrehmotor (5) über ein Getriebe mit einem zur Rotationsgabel (19) führenden Drehrohr (8) verbunden ist für eine Drehung um eine Achse D daß die Zahnriemen (27, 32) durch das Drehrohr (8) zu den Abtriebsritzeln (28, 33) des Schwenkmotors (6) bzw. Drehmotors (7) geführt sind, daß der Arbeitsarm in einer Rollenführung (1) in seiner Längsachse (R) verfahrbar ist, dadurch gekennzeichnet daß sich die Drehachsen D,E,P der Elemente Arbeitsarm, Schwenkkopf (23) und Anschlußstück (3) in einem gemeinsamen Schnittpunkt treffen, wobei das Eintriebszahnrad (31) zum Drehen des Abtriebendes des Anschlußstückes (3) auf der Schwenkachse E auf einer Eintriebswelle eines Winkelgetriebes (29) befestigt ist, dessen Abtrieb in der P-Achse des Anschlußstückes (3) liegt und mit einem Antriebsende eines Rotationsgetriebes (38) verbunden ist, das im Flanschende (23b) der Schwenkgabel (23) befestigt ist und an dessen Abtriebsende das Anschlußstück (3) befestigt ist.

**2.** Roboterarm nach Anspruch 1, dadurch gekennzeichnet, daß das Zahnrad (26) zum Schwenken der Schwenkgabel (23) mit dem Anschlußstück (3) in der Schwenkachse E auf einer Eintriebswelle (25) eines Reduziergetriebes (24) befestigt ist, dessen Eintriebsseite mittels Schrauben (52) an der Rotationsgabel (19) befestigt ist und dessen Abtriebsseite über Schrauben (52a) mit einem als Anschraubflansch ausgebildeten Arm (23a) der Schwenkgabel (23) verbunden ist.

**3.** Roboterarm nach einem oder mehreren der vorgenannten Ansprüche, dadurch gekennzeichnet, daß die Rotationsgabel (19) koaxial zur Schwenkachse E Flanschbohrungen für Ansätze der Schwenkgabel (23) hat, die auf der dem Reduziergetriebe (24) gegenüberliegenden Seite mit einem Lager (36) in einer Bohrung (22) gelagert ist und daß das Lager (36) einerseits von einem mit der Schwenkgabel (23) verschraubten inneren Schwenkflansch (34) und andererseits von einem den Schwenkflansch (34) umschließenden und mit der Rotationsgabel (19) verschraubten Halteflansch (35) abgedeckt ist.

**4.** Roboterarm nach einem oder mehreren der vorgenannten Ansprüche, dadurch gekennzeichnet, daß die mit dem Drehrohr (8) verbundene Rotationsgabel (19) über zwei Lager (20) im Abschlußende (21) der Hubsäule (2) gelagert ist.

**5.** Roboterarm nach Anspruch 4, dadurch gekennzeichnet,

6

daß das Drehrohr (8) ein Leichtmetallrohr ist und an jedem Ende mehrere zusammengeschraubte und durch Paßstifte arretierte Paßfederpaare(8a) als Drehrohrkupplung aufweist und je Paar eine Paßfeder (8a) in Nuten im Anschlußrohr (12) und in Nuten (19b) des Flansches (19a), der mit diesem verschraubten und verstifteten Rotationsgabel (19) spielfrei eingreifen.

6. Roboterarm nach einem oder mehreren der vorgenannten Ansprüche,
dadurch gekennzeichnet,
daß der Antrieb für die Achse O zum Drehen der Rotationsgabel (19) ein an einem Festflansch (4) befestigter und zwischen den Motoren (6,7) und dem Anschlußstück (3) angeordneter Säulendrehmotor (5) ist, der mittels eines Zahnriemens (16) und Zahnräder (15,17) spielfrei über eine Drehplatte (18), das Anschlußrohr (12) und das in diesm zentrierte Drehrohr (8) mit der Rotationsgabel (19) verbunden ist.

7. Roboterarm nach Anspruch 1,
dadurch gekennzeichnet,
daß Energieleistungen von einer Anschlußstelle (48) an der Rollenführung (1) als Schleife zu einem oberen Leitungsdrehspeicher (51) und weiter zu den Motoren (5, 6, 7) und durch ein im Zentrum des Drehrohres (8) angeordnetes Schutzrohr (9) sowie durch eine Öffnung in der Schwenkgabel (23) zu einem am Anschlußstück (3) angeordneten unteren Leitungsdrehspeicher (39) am Rotationsgetreibe (38) geführt sind, wobei der untere Leitungsdrehspeicher (39) das Rototationsgetriebe (38) umschließt und mittels der Schrauben (53a) an diesem befestigt ist.

8. Roboterarm nach den Ansprüchen 1 und 7
dadurch gekennzeichnet,
daß die Energieleitungen in einem oder beiden der Drehspeicher (39, 51) einzeln aufeinanderliegen und durch Scheibenringe (43) voneinander getrennt sind und daß die Energieleitungen (10, 11) in mehreren Spiralen verlegt sind und daß der Ringquerschnitt des Urehspeichers (39, 51) so breit ist, daß die Durchmesserdifferenz eine Drehung des Anschlußstückes (3) um über 360 Grad zuläßt.

9. Roboterarm nach Anspruch 8,
dadurch gekennzeichnet,
daß der Außendurchmesser des Drehspeichers (39, 51) so groß ist, daß er vier Spiralwindungen aufnehmen kann und daß der Innendurchmesser des Drehspeichers (39, 51) so klein ist, daß er mehr als fünf Spiralwindungen aufnehmen kann.

10. Roboterarm nach den Ansprüchen 1 und 7 bis 9,
dadurch gekennzeichnet,
daß die Energieleitungen beim innenliegenden Kabelabgang (45) der Spiralwendeln des Leitungsdrehspeichers (39) mit einer zweiteiligen Schwenkschelle (47) verbunden und mittels eines Lagerdornes (66) im Drehspeicherdeckel (59) parallel zur Drehachse P schwenkbar gelagert sind.

11. Roboterarm nach einem oder mehreren der vorgenannten Ansprüche,
dadurch gekennzeichnet,
daß am unteren Ende dei Schutzrohres (9) eine Schwenkbuchse (67) von einer Lagerbuchse (78) gehalten ist und deren Bohrungen zur Aufnahme der Energieleitungen größer als diese sind, damit sie sich zwängungsfrei in Längsrichtung des unteren Endes des Schutzrohres (9) bewegen können.

**Claims**

1. A robot arm with a motor-driven connection piece (3) for tools, workpieces, workpiece grippers or gripper-changing systems adjoining one operating arm, the motors (5, 6, 7) being located on the end of the operating am opposite the connection piece (3) and being connected via drive connections to toothed wheels (26, 31) mounted in a pivot axis of a pivot head (23) of the connection piece (3), with a toothed wheel (26), connected to the pivot fork (23), for a first toothed belt (27) leading to the pivot motor (6) and a drive input toothed wheel (31), coupled to the connection piece (3), for a second toothed belt (32) leading to the torque motor (7) for rotating the connection piece about an axis P being located on a pivot axis E, and a column rotation motor (5) being connected via gearing to a rotation pipe (8) leading to the rotation fork (19) for rotation about an axis D, that the toothed belts (27, 32) are guided through the rotation pipe (8) to the drive output pinions (28, 33) of the pivot motor (6) or rotation motor (7), that the operating am is movable in its longitudinal axis (R) in a roller guide (1),
characterised in that
the axes of rotation D, E, P of the elements operating arm, pivot head (23) and connection piece (3) meet at a common point of intersection, the input toothed wheel (31) for rotating the drive output end of the connection piece (3) is attached on the pivot axis E to an input shaft of an angular gear (29), the output of which is located in the P axis of the connection piece (3) and is connected to a drive end of rotation gears (38) which is fastened in the flange end (23b) of the pivot fork (23) and to the output end of which the connection piece (3) is attached.

2. A robot arm according to Claim 1,
characterised in that
the toothed wheel (26) for pivoting the pivot fork (23) with the connection piece (3) in the pivot axis E is attached to an input shaft (25) of a reducing gear (24), the input side of which is attached to the rotation fork (19) by means of screws (52) and the output side of which is connected via screws (52a) to an arm (23a) of the pivot fork (23) which is designed as a screw-attachment flange.

3. A robot arm according to one or more of the preceding Claims,
characterised in that
the rotation fork (19), coaxially to the pivot axis E, has flange bores for projections of the pivot fork (23) which is mounted on the side opposite the reducing gear (24) by means of a bearing (36) in a bore (22), and that the bearing (36) is covered on one side by an inner pivot flange (34) screwed to the pivot fork (23) and on the other side by a holding flange (35) surrounding the pivot flange (34) and screwed to the rotation fork (19).

4. A robot arm according to one or more of the preceding Claims,
characterised in that
the rotation fork (19) connected to the rotation pipe (8) is mounted by means of two bearings (20) in the bottom end (21) of the lifting column (2).

5. A robot arm according to Claim 4,
characterised in that
the rotation pipe (8) is a light metal pipe and has at each end a plurality of pairs of adjusting springs (8a) which are screwed together and locked by fixing pins as a rotation pipe coupling and, per pair, one adjusting spring (8a) engages without play in grooves in the connection pipe (12) and in grooves (19b) in the flange (19a) of the rotation fork (19) which is screwed and pinned thereto.

6. A robot arm according to one or more of the preceding Claims,
characterised in that
the drive for the axle D for rotating the rotation fork (19) is a column rotation motor (5) attached to a fixed flange (4) and located between the motors (6, 7) and the connection piece (3), which motor (5) is connected without play to the rotation fork (19) via a rotation plate (18), the connection pipe (12) and the rotation pipe (8) centred therein by means of a toothed belt (16) and toothed wheels (15, 17).

7. A robot arm according to Claim 1,
characterised in that
power lines pass from a connection point (48) on the roller guide (1) as a loop to an upper rotary line storage means (51) and on to the motors (5, 6, 7) and through a protective pipe (9) located in the centre of the rotation pipe (8) and through an opening in the pivot fork (23) to a lower rotary line storage means (39) on the rotation gears (38) located on the connection piece (3), the lower rotary line storage means (39) surrounding the rotation gears (38) and being attached thereto by means of the screws (53a).

8. A robot arm according to Claims 1 and 7,
characterised in that
the power lines in one or both of the rotary storage means (39, 51) lie individually one on another and are separated from one another by disc rings (43), and that the power lines (10, 11) are laid in a plurality of coils and that the annular cross-section of the rotary storage means (39, 51) is so wide that the difference in diameter permits rotation of the connection piece (3) by more than 360 degrees.

9. A robot arm according to Claim 8,
characterised in that
the external diameter of the rotary storage means (39, 51) is so large that it can receive four coil windings and that the internal diameter of the rotary storage means (39, 51) is so small that it can receive more than five coil windings.

10. A robot arm according to Claims 1 and 7 to 9,
characterised in that
the power lines for the internal cable outlet (45) of the coils of the rotary line storage means (39) are connected to a two-part pivot collar (47) and are mounted in the rotary storage means cover (59) by means of a bearing spindle (66) so as to be pivotable parallel to the axis of rotation P.

11. A robot arm according to one or more of the preceding Claims,
characterised in that
at the lower end of the protective pipe (9) a pivot bush (67) is held by a bearing bush (78) and the bores thereof for receiving the power lines are larger than the latter, so that they can move without crowding in the longitudinal direction of the lower end of the protective pipe (9).

**Revendications**

1. Bras de robot, comprenant une pièce de raccordement (3), déplacée par des moteurs et raccordée à un bras de travail, pour des outils, des pièces, des pinces de pièces ou des systèmes d'échange à pinces, les moteurs (5, 6, 7) étant agencés à l'extrémité du bras de travail, opposée à la pièce de raccordement (3), et étant reliés, par l'intermédiaire de liaisons d'entraînement, à des roues dentées (26, 31) montées dans un axe de pivotement d'une tête pivotante (23) de la pièce de raccordement (3), par quoi, sur un axe de pivotement E, sont agencées une roue dentée (26) reliée à la fourche pivotante (23) pour une première courroie crantée (27) menant au moteur oscillant (6), et une roue dentée d'entraînement (31), couplée à la pièce de raccordement (3), pour une seconde courroie crantée (32) menant au moteur rotatif (7), pour faire tourner la pièce de raccordement autour d'un axe P, et un moteur de colonne (5) est relié, par l'intermédiaire d'un engrenage, à un tube rotatif (8) menant à la fourche rotative (19), pour une rotation autour d'un axe D, les courroies crantées (27, 32) étant guidées à travers le tube rotatif (8) vers les pignons menés (28, 33) du moteur oscillant (6) ou du moteur rotatif (7), le bras de travail pouvant être déplacé le long de son axe longitudinal (R) dans un guide à rouleaux (1),
caractérisé en ce que les axes de rotation (D, E, P) des éléments, bras de travail, tête pivotante (23) et pièce de raccordement (3), se coupent en un point commun, la roue dentée (31) étant fixée pour faire tourner l'extrémité menée de la pièce de raccordement (3) sur l'axe de pivotement (E) sur un arbre d'un engrenage conique (29), dont la prise de force se trouve sur l'axe P de la pièce de raccordement (3), et étant reliée à une extrémité d'entraînement d'un engrenage rotatif (38), qui est fixé dans l'âme (23b) de la fourche pivotante (23) et à l'extrémité menée duquel est fixée la pièce de raccordement (3).

2. Bras de robot selon la revendication 1,
caractérisé en ce que la roue dentée (26), pour faire pivoter la fourche (23) avec la pièce de raccordement (3) sur l'axe de pivotement E, est fixée sur un arbre d'entraînement (25) d'un engrenage réducteur (24), dont le côté d'entraînement est fixé au moyen de vis (52) à la fourche rotative (19), et dont le côté mené est relié, par l'intermédiaire de vis (52a), à un bras (23a) de la fourche (23), réalisé en tant que bride de vissage.

3. Bras de robot selon une ou plusieurs des revendications précédentes,
caractérisé en ce que la fourche rotative (19) présente, coaxialement à l'axe de pivotement E, des perçages pour des pièces rapportées de la fourche pivotante (23), qui est montée, sur le côté opposé à l'engrenage réducteur (24), par un palier (36) dans un perçage (22), et en ce que le palier (36) est recouvert, d'une part, par une bride pivotante interne (34) vissée à la fourche (23) et, d'autre part, par une bride de maintien (35) entourant la bride pivotante (34) et vissée à la fourche rotative (19).

4. Bras de robot selon une ou plusieurs des revendications précédentes,

9

caractérisé en ce que la fourche rotative (19), reliée au tube rotatif (8), est montée, par l'intermédiaire de deux paliers (20), dans l'extrémité fermée (21) de la colonne de levage (2).

5.  Bras de robot selon la revendication 4,
    caractérisé en ce que le tube rotatif (8) est un tube de métal léger, et présente, à chaque extrémité, plusieurs paires de ressorts d'ajustage (8a) vissées ensemble et bloquées par des goupilles en tant que couplage du tube rotatif, et chaque paire présente un ressort d'ajustage (8a) dans une gorge du tube de raccordement (12) et dans une gorge (19b) de la bride (19a), qui s'engage sans jeu avec cette fourche rotative (19) vissée et goupillée.

6.  Bras de robot selon une ou plusieurs des revendications précédentes,
    caractérisé en ce que l'entraînement pour l'axe D pour faire tourner la fourche rotative (19) est un moteur rotatif (5) fixé à une bride fixe (4) et agencé entre les moteurs (6, 7) et la pièce de raccordement (3), qui est relié sans jeu, au moyen d'une courroie crantée (16) et des roues dentées (15, 17), par l'intermédiaire d'une plaque tournante (18), du tube de raccordement (12) et du tube rotatif (8) centré dans celui-ci, à la fourche rotative (19).

7.  Bras de robot selon la revendication 1,
    caractérisé en ce que des conducteurs d'énergie sont guidés d'un point de raccordement (48) sur le guide à rouleaux (1), en tant que boucle, à un accumulateur supérieur (51) et ensuite aux moteurs (5, 6, 7) et, par un tube de protection (9) agencé au centre du tube rotatif (8), ainsi que par une ouverture dans la fourche pivotante (23), à un accumulateur inférieur (39) agencé sur la pièce de raccordement (3), sur l'engrenage rotatif (38), l'accumulateur inférieur (39) entourant l'engrenage rotatif (38) et étant fixé à celui-ci au moyen des vis (53a).

8.  Bras de robot selon les revendications 1 et 7,
    caractérisé en ce que les conducteurs d'énergie sont agencés individuellement dans un ou les deux accumulateurs (32, 51) et sont séparés l'un de l'autre par des bagues (43), et en ce que les conducteurs d'énergie (10, 11) sont posés en plusieurs spirales, et en ce que la section transversale annulaire de l'accumulateur (39, 51) présente une largeur telle que la différence de diamètres autorise une rotation de la pièce de raccordement (3) sur plus de 360 degrés.

9.  Bras de robot selon la revendication 8,
    caractérisé en ce que le diamètre externe de l'accumulateur (39, 51) est tel qu'il peut recevoir quatre spires, et en ce que le diamètre interne de l'accumulateur (39, 51) est tel qu'il peut recevoir plus de cinq spires.

10. Bras de robot selon les revendications 1 et 7 à 9,
    caractérisé en ce que les conducteurs d'énergie, pour une sortie de câble interne (45) des spires de l'accumulateur (39), sont reliés à un collier de serrage en deux pièces (47) et sont montés pivotants, au moyen d'un boulon (66), dans le couvercle (59) de l'accumulateur parallèlement à l'axe de rotation P.

11. Bras de robot selon une ou plusieurs des revendications précédentes,
    caractérisé en ce que, à l'extrémité inférieure du tube de protection (9), est maintenue, par un coussinet de palier (78), une douille (67) dont les perçages pour la réception des conducteurs d'énergie sont plus grands que ceux-ci, pour qu'ils puissent se déplacer sans contrainte en direction longitudinale de l'extrémité inférieure du tube de protection (9).

# Fig.1

EP 0 260 219 B1

Fig.2

Fig.3

**Fig.4**

**Fig.5**

Fig. 6

9  67

78

10,11

Fig. 7

Fig. 9

Fig. 8

39

10.11

47

46

45

44

59  66

45

47

66

# Fig.10

1) D

8

23
E
3
P

2) D

E

3) D

4) E

5) E

P

6) P

7) D

P

8) P

9) D